# EUROPEAN PATENT APPLICATION

(11) **EP 4 714 588 A1**
(43) Date of publication of application: **25.03.2026**
(21) Application number: 24382999.1
(22) Date of filing: 19.09.2024
(51) Int. Cl.: B23P 19/04, B23B 49/00, B64C 1/12, B64C 3/26, B64F 5/10, B29C 65/48, B29C 65/56, B29C 65/00, B23Q 17/20

(54) **METHOD FOR ASSEMBLING PARTS**

(71) Applicant: Airbus Operations, S.L.U., 28906 Getafe (Madrid) (ES); AIRBUS OPERATIONS (S.A.S.), 31060 Toulouse (FR); Airbus Operations Limited, Bristol BS34 7PA (GB)
(72) Inventor: FLORES HERNANDEZ, Carlos, 28906 Getafe (Madrid) (ES); COGNE, Fabrice, 31060 Toulouse (FR); BLATCH, Paul, Bristol BS34 7PA (GB)
(74) Representative: Herrero & Asociados, S.L.

(57) **Abstract**

The method for assembling parts comprises the following steps: providing a first and second parts (1, 2) to be assembled; applying a shim and sealant material (3) on the first part (1) to be assembled; positioning the first part (1) on the second part (2) to be assembled, with the shim and sealant material (3) placed between the first and second parts (1, 2); detecting a contour of the first or second part (1, 2) at least partially covered by the other of the first or second part (1, 2); drilling one or more holes in the first and second parts (1, 2), based on the detected contour; and placing a fastener (6) in the or each drilled hole.

It permits to provide a simplified assembling method that reduces these costs.

## Description

### Field of the invention

The present invention relates to a method for assembling parts, such as aircraft structural elements, including positioning and drilling of the parts to be assembled.

### Background of the invention

A typical method for assembling parts, such as aircraft structural elements, comprise the following steps:
Firstly, a positioning step is carried out, in which parts are placed into receiving components by an accurate tooling, ensuring the relative and global position. An example of this could be the position of a rib in a wing cover, or a frame inside a fuselage.

Once the right position is obtained, the positioning must be secured along the next steps. To achieve this goal, one of the parts have pre-holes in several positions. For example, about 25% of the positions are drilled with a smaller diameter than the final hole.

For example, a rib with 100 fasteners of 9.5 mm diameter that is installed in a flange in contact with a cover, would be delivered by the supplier with 25 holes spread along the flange and with a diameter of 3.25 mm.

These pre-holes are back drilled to the receiving part. And then temporary fasteners are installed to hold both parts together in the right position.

To ensure that build stresses are not introduced into the structure while they are being assembled, a reduced clamping force un comparison to the final fastener one is applied. In those conditions, the gaps between both parts are measured.

If the measured gap is higher than a predetermined value it is filled with shim. The shim may be a liquid or solid material.

With all the inner structure of the component already installed, it is ready to be drilled up to the final diameter.

As the relative position of the different parts installed may vary, the automatic drilling machine in charge of performing the holes takes local references for each part.

This is translated into the installation of a camera inside an end effector of the drilling machine, that can identify the position of at least two of these temporary fasteners per part.

Once the machine has located the part, by identifying the temporary fasteners from the exposed side, it is ready to drill to the final diameter the rest of the holes according to the nominal pattern.

It is also necessary to drill to the final diameter the holes that were pre-drilled and equipped with a temporary fastener.

To prevent the parts from falling, fixations or temporary fasteners shall be installed in the holes already drilled to the final diameter before removing the temporary fasteners installed in the pre-holes.

At this point, the temporary fasteners on the pre-holes can be removed and the pre-holes be drilled to the final diameter.

Once the component is drilled and temporarily fastened, the clamping is removed, and the inner parts are taken away to clean and deburr the interface.

With the interfaces cleaned, an interface sealant is applied to prevent corrosion or to avoid pressure leakage, for instance.

The final step is to fix the structure together, introducing fasteners inside the holes.

As it is clear, current conventional assembling methods require a considerable amount of time and resources, including complex ergonomic positions, which increased associated costs.

### Description of the invention

Therefore, an objective of the present invention is to provide a simplified assembling method that reduces these costs.

The method for assembling parts of the invention solves the above-mentioned disadvantages and has other advantages which will be described below.

The method for assembling parts according to the present invention is described in claim 1, and the dependent claims include additional features that are optional.

In particular, the method for assembling parts comprises the following steps:
- providing a first and second parts to be assembled;
- applying a shim and sealant material on the first part to be assembled;
- positioning the first part on the second part to be assembled, with the shim and sealant material placed between the first and second parts;
- detecting a contour of the first or second part at least partially covered by the other of the first or second part;
- drilling one or more holes in the first and second parts, based on the detected contour; and
- placing a fastener in the or each drilled hole.

Preferably, the first part has dimensions that are lower than the dimensions of the second part.

According to two alternative embodiments, the detection of the contour of the first or second part is done by eddy currents or by ultrasounds, even though other "see-through" techniques could be used.

Preferably, the shim and sealant material is applied in liquid or gel form, which is cured and made solid after a time period.

According to preferred embodiments, the shim and sealant material is fiber-reinforced plastic or a two-component epoxy resin.

With the method according to the present invention, a simpler assembly method can be obtained, because some steps of the traditional methods can be removed.

In particular, only one application of a shim and sealant material at the beginning of the method is needed, and it is not needed to measure the gap between the parts to be assembled, within design tolerances.

Furthermore, applying the shim and sealant material between the parts, there is no need to predrill and put temporary fasteners to prevent the parts to separate while drilling, there is no need to install temporary fasteners after final drilling to keep the parts together, and there is no need to separate them to debur after the drilling.

As there are no pre-holes, as the parts are only stuck together, a reference to locate the drilling machine and perform the drilling pattern is obtained.

This reference, obtained for example by eddy currents, allows to take a local reference, detecting the hidden part contour.

This approach provides a method independent from external reference such as tooling, enabling a part as master philosophy, and at the same time making the method resilient in front of design changes.

Furthermore, the assembling method according to the present invention reduces drastically non-added value operations and enables the quality control and its automation.

### Brief description of the drawings

For a better understanding of what has been explained above, some drawings are included in which, schematically and only by way of a non-limiting example, a practical case of embodiment is represented.
Figure 1 is an elevation view of a first step of the method according to the present invention, in which a shim and sealant material is applied on a first part to be assembled;
Figure 2 is an elevation view of a second step of the method according to the present invention, in which the first part and a second part are assembled to each other with the shim and sealant material between them;
Figure 3 is a perspective view of a third step of the method according to the present invention, in which the contour of the first part is detected;
Figure 4 is a perspective view of a fourth step of the method according to the present invention, in which both first and second parts are drilled together according to the detected contour; and
Figure 5 is a sectional elevation view of the first and second parts assembled together by a plurality of fasteners placed inside the holes drilled in the previous step.

### Description of a preferred embodiment

The method for assembling two parts according to the present invention is preferably used for assembling two parts of an aircraft, such as two structural elements, even though it can be used in any other technical field in which the contour of a part needs to be detected because there is no visibility on this part for the operator.

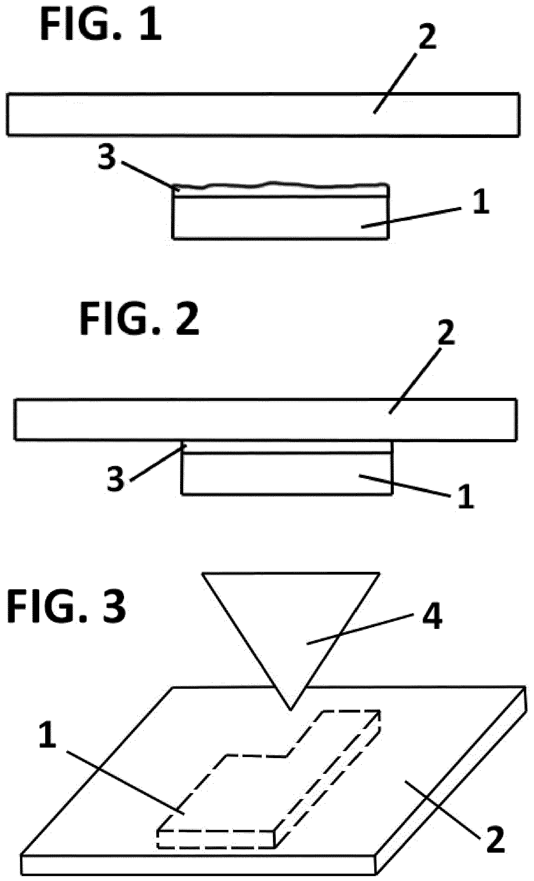

In the method according to the present invention, firstly a shim a sealant material 3 is applied a first part 1 to be assembled, shown in Figure 1. This material has the function of a shim and a sealant at the same time, i.e., it protects from corrosion, avoids the introduction of other elements between the parts acting as a shim, i.e., withstanding loads and preventing deformation of the parts under the compression applied by rivets, so it can withstand this load from rivets, and ensures watertightness, among other features.

This kind of material, known in the art as "shealant" is disclosed, e.g., in US2019359815 A1, and for example, it can be fiber-reinforced plastic or a two-component epoxy resin.

This shim and sealant material 3 is applied to the first part 1 in a liquid or gel form, and it is cured subsequently into a solid form.

After this application step, a second part 2 to be assembled is positioned in contact with the first part 1, the shim and sealant material 3 being between the first and second parts 1, 2, as shown in Figure 2.

In this position the assembly of the first and second parts 1, 2 define an exposed side and an unexposed side. In Figure 2, the exposed side is the upper side, and the unexposed side is the lower side.

Furthermore, as shown in this Figure 2, the dimensions of the first part 1 are lower than the dimensions of the second part 2, so that from the exposed side, the operator that is assembling the parts cannot see the contour of the first part 1 at least partially covered by the second part 2. This can happen, for example, when parts of an aircraft are assembled during the manufacturing process of the aircraft, e.g. when frames are being installed behind a fuselage panel.

To solve this problem, differently from the assembling methods discussed in the background portion of this specification, the method according to the present invention provides a solution of a "see-through" detection of the contour of the first part 1, that, combined with the use of a shim and sealant material 3, permits to simplify the assembling method.

As shown in Figure 3, using a contour detector 4, such as an eddy current detector or an ultrasounds detector, the contour of the first part 1 can be detected, so that there is no need of drilling pre-holes, as in the conventional assembling methods.

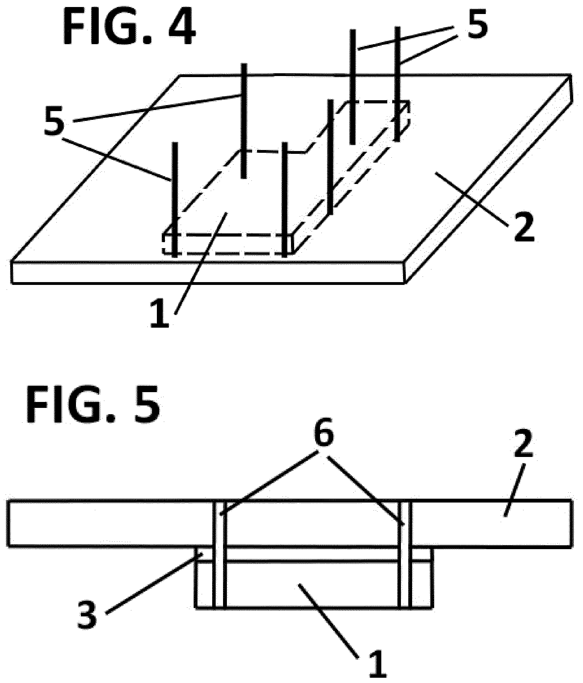

Once the contour of the first part 1 is detected, one or more holes can be drilled in both the first and second parts 1, 2 at the same time, as shown in Figure 4, which shows a plurality of drilling heads 5.

Finally, a fastener 6 is placed inside the or each hole made in the first and second parts 1, 2, so that they are assembled as shown in Figure 5.

As stated previously, the combined use of the shim and sealant material and the detection of the contour of one of the parts to be assembled permits to simplify the method, reducing its costs.

## Claims

1. Method for assembling parts, comprising the following steps:
- providing a first and second parts (1, 2) to be assembled;
- applying a shim and sealant material (3) on the first part (1) to be assembled;
- positioning the first part (1) on the second part (2) to be assembled, with the shim and sealant material (3) placed between the first and second parts (1, 2);
- detecting a contour of the first or second part (1, 2) at least partially covered by the other of the first or second part (1, 2);
- drilling one or more holes in the first and second parts (1, 2), based on the detected contour; and
- placing a fastener (6) in the or each drilled hole.

2. Method for assembling parts according to claim 1, wherein the first part (1) has dimensions that are lower than the dimensions of the second part (2).

3. Method for assembling parts according to claim 1 or 2, wherein the detection of the contour of the first or second part (1, 2) is done using eddy currents.

4. Method for assembling parts according to claim 1 or 2, wherein the detection of the contour of the first or second part (1, 2) is done using ultrasounds.

5. Method for assembling parts according to any one of the previous claims, wherein the shim and sealant material (3) is applied in liquid or gel form.

6. Method for assembling parts according to claim 1 or 5, wherein the shim and sealant material (3) is fiber-reinforced plastic or a two-component epoxy resin.
